# EUROPEAN PATENT APPLICATION

(11) **EP 2 336 555 A1**
(43) Date of publication of application: **22.06.2011**
(21) Application number: 09179056.8
(22) Date of filing: 14.12.2009
(51) Int. Cl.: F03D 7/02

(54) **Magnetic active flap**

(71) Applicant: LM GLASFIBER A/S, 6000 Kolding (DK)
(72) Inventor: Grabau, Peter, 6000 Kolding (DK)
(74) Representative: Mikkelsen, Jacob

(57) **Abstract**

The present invention relates to a wind turbine blade for a rotor of a wind turbine having a substantially horizontal rotor shaft and a hub connected to the rotor shaft. The blade may extend in a substantially radial direction from the hub and when mounted to the hub. The blade may comprise a profiled contour comprising a pressure side and a suction side and a leading edge and a trailing edge connecting the pressure side and the suction side, and a lift regulating device comprising a magnetisable material and an operation device comprising an electromagnet configured to operate the lift regulating device between a first state and a second state. Further, the present invention relates to a method of operating a wind turbine configured to convert wind energy to electrical energy. The wind turbine may comprise a tower having a first and an opposite second end, a nacelle positioned at the first end of the tower, a substantially horizontal rotor shaft rotatably mounted in the nacelle, a hub mounted at the rotor shaft, a blade for a rotor of a wind turbine having a substantially horizontal rotor shaft, the blade extending in a substantially radial direction from the hub when mounted to the hub. The blade may comprise a profiled contour comprising a pressure side and a suction side and a leading edge and a trailing edge connecting the pressure side and the suction side, a lift regulating device comprising a magnetisable material and an operation device comprising an electromagnet configured to operate the lift regulating device between a first state and a second state. The method may comprise the steps of obtaining information regarding current wind conditions at the wind turbine, and determining lift regulating device settings based on the current wind conditions.

## Description

The present invention relates to a blade for a rotor of a wind turbine having a substantially horizontal rotor shaft. The blade comprises an adjustable lift regulating device. The rotor comprises a hub, from which the blade extends in a substantially radial direction when mounted to the hub.

Wind turbines for converting wind energy to electrical energy are only able to operate in wind speeds of a certain limit, called the cut-out wind speed. The higher the cut-out wind speed is, the longer a wind turbine may be operated during a storm. There is a need for improving the performance of wind turbine blades in high wind speeds, thereby allowing operation of the wind turbine

An aspect of the present invention relates to a wind turbine blade for a rotor of a wind turbine having a substantially horizontal rotor shaft. The wind turbine may have a hub connected to the rotor shaft. The blade may extend in a substantially radial direction from the hub when the blade is mounted to the hub. The blade may comprise a profiled contour comprising a pressure side and a suction side and a leading edge and a trailing edge connecting the pressure side and the suction side. The blade may comprise a lift regulating device comprising a magnetisable material and an operation device comprising an electromagnet configured to operate the lift regulating device between a first state and a second state.

An aspect of the present invention relates to a wind turbine configured to convert wind energy to electrical energy. The wind turbine may comprise a tower having a first and an opposite second end. The wind turbine may have a nacelle positioned at the first end of the tower. A substantially horizontal rotor shaft may be rotatably mounted in the nacelle. A hub may be mounted at the rotor shaft. A blade for a rotor of a wind turbine may have a substantially horizontal rotor shaft. The blade may extend in a substantially radial direction from the hub when the blade is mounted to the hub. The blade may comprise a profiled contour comprising a pressure side and a suction side and a leading edge and a trailing edge connecting the pressure side and the suction side. The blade may comprise a lift regulating device comprising a magnetisable material and an operation device comprising an electromagnet configured to operate the lift regulating device between a first state and a second state.

An aspect of the present invention relates to a method of operating a wind turbine configured to convert wind energy to electrical energy. The wind turbine may comprise a tower having a first and an opposite second end. The wind turbine may comprise a nacelle positioned at the first end of the tower. The wind turbine may comprise a substantially horizontal rotor shaft rotatably mounted in the nacelle. The wind turbine may comprise a hub mounted on the rotor shaft. The wind turbine may comprise a blade for a rotor of a wind turbine having a substantially horizontal rotor shaft. The blade may extend in a substantially radial direction from the hub when the blade is mounted to the hub.

The blade may comprise a profiled contour comprising a pressure side and a suction side and a leading edge and a trailing edge connecting the pressure side and the suction side. The blade may comprise a lift regulating device comprising a magnetisable material and an operation device comprising an electromagnet configured to operate the lift regulating device between a first state and a second state. The method may comprise the step of obtaining information regarding current wind conditions at the wind turbine. The method may comprise the step of determining lift regulating device settings based on the current wind conditions. The method may comprise the step of adjusting the lift regulating device based on the lift regulating device settings using the electromagnet.

In all the above aspects, the blade may comprise a profiled contour comprising a pressure side and a suction side and a leading edge and a trailing edge connecting the pressure side and the suction side. The blade may comprise a chord extending between the leading edge and the trailing edge. The profiled contour may generate a lift when being impacted by incident airflow. In the radial direction, the profiled contour may be divided into a root region with a substantially circular or elliptical profile closest to the hub, an airfoil region with a lift generating profile furthest away from the hub, and preferably a transition region between the root region and the airfoil region. The transition region may have a profile changing gradually in the radial direction from the circular or elliptical profile of the root region to the lift generating profile of the airfoil region. The blade may comprise a lift regulating device and an operation device configured to operate the lift regulating device gradually between a first state and a second state.

The lift regulating device may be located in the airfoil region. The blade may be mounted to the hub at the root region of the blade.

The lift regulating device is contemplated to regulate the lift of the blade so that the wind turbine may be operated safely at higher wind speeds compared to blades of a wind turbine not having the lift regulating device. The lift regulating device is contemplated to reduce the load when the wind speed increases.

The present invention will be discussed in more detail below with reference to the drawings in which:
Fig. 1 is a schematic illustration of a wind turbine,
Fig. 2 is a schematic illustration of a blade,
Fig. 3 is a schematic illustration of a part of a blade, and
Fig. 4 is a schematic illustration of a graph illustrating the method.

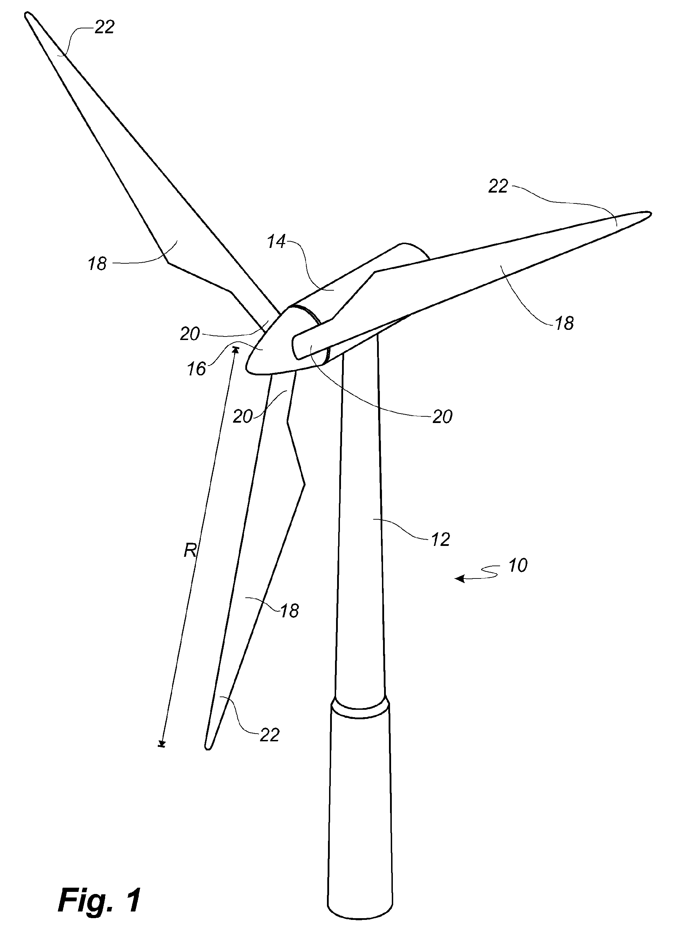

Fig. 1 illustrates a modern upwind wind turbine 10 according to the so-called "Danish concept" with a tower 12, a nacelle 14 and a rotor with a substantially horizontal rotor shaft. The rotor includes a hub 16 and three blades, each denoted the reference numeral 18, extending radially from the hub 16, each having a blade root 20 nearest to the hub 16 and a blade tip 22 furthest away from the hub 16. The diameter of the turbine is illustrated by the line denoted R extending from the hub 16 to the end of the tip 22.

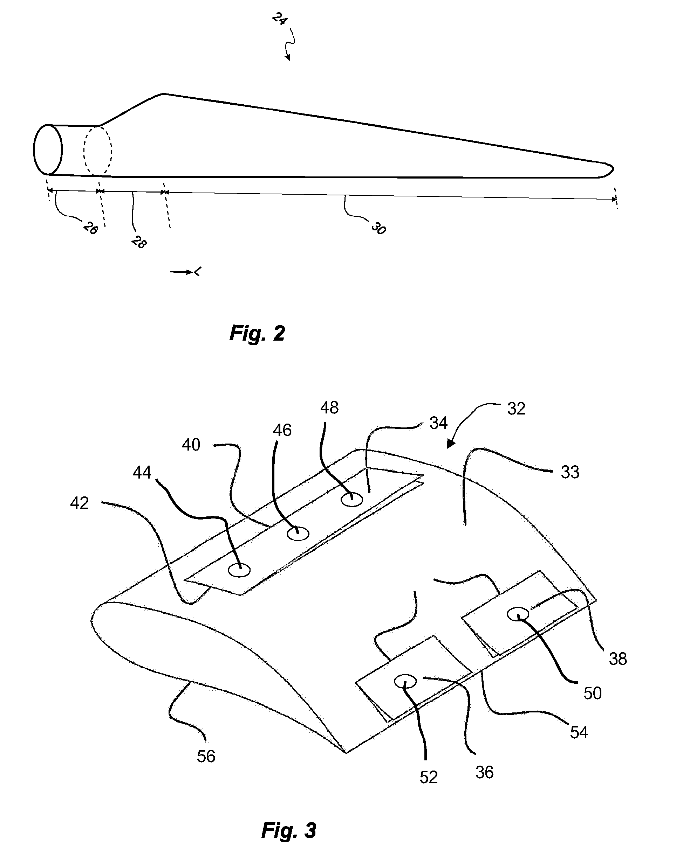

Fig. 2 is a schematic illustration of a blade 24, similar to the blades 18 in Fig. 1.

The blade 24 comprises a profiled contour comprising a pressure side and a suction side. Further, the blade 24 comprises a leading edge and a trailing edge connecting the pressure side and the suction side. A chord extends between the leading edge and the trailing edge. The profiled contour of the blade 24 generates a lift when being impacted by incident airflow.

In the radial direction, the profiled contour is divided into a root region 26 with a substantially circular or elliptical profile closest to the hub 16. The profiled contour comprises an airfoil region 30 with a lift generating profile furthest away from the hub 16. Preferably, the blade 24 comprises a transition region 28 between the root region 26 and the airfoil region 30. The transition region 28 has a profile changing gradually in the radial direction from the circular or elliptical profile of the root region 26 to the lift generating profile of the airfoil region 30.

Fig. 3 is a schematic, zoomed illustration of a part of a blade 32. The blade 32 comprises a first lift regulating device 34, a second lift regulating device 36 and a third lift regulating device 38.

The lift regulating device comprises a magnetisable material, and an operation device comprises an electromagnet configured to operate the lift regulating device between a first state and a second state

The first lift regulating device 34 comprises three points 44, 46 and 48, where an operation device, not illustrated here, operates the first lift regulating device 34 gradually between a first state, where the lift regulating device 34 is in the same plane as the surface of the profiled contour 32, and a second state, where the lift regulating device 34 is at its maximum lift regulating or deployed state. The lift regulating devices are located in the airfoil region 30 of the blade 24. In other embodiments, the lift regulating device may be placed in other parts or regions of the blade.

The blade 24 may have a lift regulating device 34 located at the pressure side 56 of the blade 32, or as shown in Fig. 3 at the suction side 33 of the blade 32. The blade 32 may include a lift regulating device 34 located at the suction side 33 of the blade and an additional lift regulating device located at the pressure side 56 of the blade 24.

The operation device, not illustrated, may comprise an electromagnet. The electromagnet is used to provide a force in a direction away from the blade 24. The force is contemplated to move the lift regulating device 34 from the first position and towards the second position. The electromagnet may be operated by changing the current in the electromagnet. The current may be changed in steps or smoothly.

It is contemplated that the blade including the lift regulating device allows the blade to be in operation in winds having higher wind speeds compared to blades not having the lift regulating device and the same profiled contour.

In an embodiment, the lift regulating device is biased away from the profiled contour. In such an embodiment, the biased lift regulating device acts as a passive regulator in fluctuations in the loads, and the activation of the operation device is an active regulation of the lift of the blade.

In the embodiment illustrated in Fig. 3, the lift regulating device is constituted by surface mounted flaps 34, 36 and 38.

In an embodiment, the operation device may comprise a plurality of electromagnets. The plurality of electromagnets may be operable individually. This is illustrated by the lift regulating device 34 including three electromagnets 44, 46 and 48.

In the embodiment in Fig. 3, the blade comprises three lift regulating devices which may be in operation independently. As is illustrated in Fig. 3, the electromagnet at 48 exerts a higher force on the flap 34 than the force exerted by the electromagnet at 46.

The surface mounted flaps may be operated in a repulsion mode or an attraction mode, such that by activation of the operation device, the flap is pushed away from the surface of the blade or is attracted towards the blade surface. If the flap 34 is biased away from the surface of the blade 32, the electromagnets at 44, 46 and 48 may be used for attracting the flap 34 towards the surface of the blade 32. Even though the flap 34 may be biased away from the surface of the blade 32, the electromagnets at 44, 46 and 48 may be used for repelling the flap 34 further away from the surface.

The electromagnets at 44, 46 and 48 may be controlled by a single operation device.

In an embodiment, the blade 32 may comprise a first plurality of lift regulating devices 34. Each lift regulating device 34 may comprise multiple electromagnets being operable individually and/or in groups. The individual operation of the electromagnets is contemplated to allow an accurate operation of the lift regulating device in response to changes in wind conditions.

In an embodiment, the lift regulating device may comprise a first permanent magnet positioned so that an electromagnet in the operation device may operate the lift regulating device reversibly from the first state to the second state by either repulsing or attracting the permanent magnet. The permanent magnet is contemplated to ensure that the response of the lift regulating device is increased. In an embodiment, an electromagnet may be used.

In an embodiment, the lift regulating device may comprise a plurality of permanent magnets arranged at discrete sites of the lift regulating device. In the present context, the term discrete sites means different locations, e.g. a plurality of magnets positioned at remote sites.

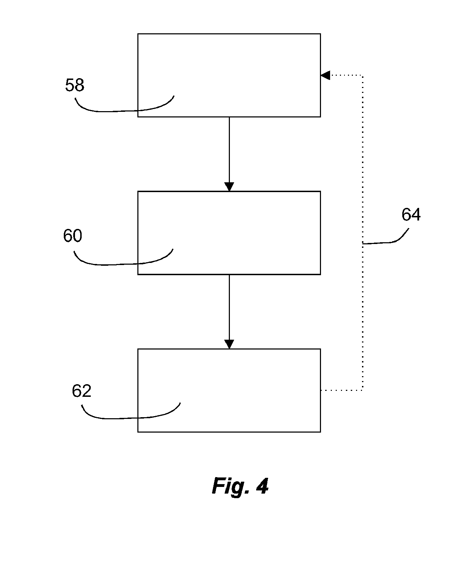

Fig. 4 is a schematic illustration of a method of operating a wind turbine configured to convert wind energy to electrical energy. The wind turbine may be of the type discussed above.

The method may comprise a step of obtaining 58 information regarding current wind conditions at the wind turbine. The method may comprise a step of determining 60 lift regulating device settings based on the current wind conditions. The method may comprise a step of adjusting 62 the lift regulating device based on the lift regulating device settings using the electromagnet.

The steps 58, 60 and 62 above may be repeated as indicated by the punctured line 64.

The wind turbine may comprise a wind sensor configured to detect wind conditions in a region near the wind turbine. The wind sensor may be positioned outside or remote from the wind turbine. The wind sensor may be constituted by several sensors. The wind sensor may supply information regarding the current wind conditions to the wind turbine. It is contemplated that at any given time, the operation of the lift regulating device relative to the current wind conditions is advantageous as that allows the lift regulating device to reduce the lift if the wind speed is too high for the blade profile alone. The profiled contour provides certain properties and a certain cut-out wind speed. Also, if the lift regulating device is deployed or activated and the wind speed decreases, the lift regulating device may be retracted or deactivated to increase the lift.

The method may be performed continuously while the wind turbine is in operation. The wind conditions may be monitored periodically and the settings of the lift regulating device may be determined and set based on newly determined wind conditions. The method may also be performed in other ways, for instance the wind conditions may be monitored at all times, and when the wind changes outside a predetermined range from the current settings a new set of lift regulating device settings may be determined.

All of the above features, embodiments and steps may be combined in any way possible.

## Claims

1. A wind turbine blade for a rotor of a wind turbine having a substantially horizontal rotor shaft and a hub connected to the rotor shaft, the blade extending in a substantially radial direction from the hub and when mounted to the hub, the blade comprises:
a profiled contour comprising a pressure side and a suction side and a leading edge and a trailing edge connecting the pressure side and the suction side,
a lift regulating device comprising a magnetisable material and an operation device comprising an electromagnet configured to operate the lift regulating device between a first state and a second state.

2. The blade according to claim 1, wherein the lift regulating device is located at the suction side of the blade or in the alternative at the pressure side of the blade.

3. The blade according to claim 1, wherein the blade comprises a first lift regulating device at the suction side of the blade and a second lift regulating device at the pressure side.

4. The blade according to any of the claims 1-3, wherein the lift regulating device is located in the airfoil region of the blade.

5. The blade according to any of the claims 1-4, wherein the lift regulating device is constituted by surface mounted flaps.

6. The blade according to any of the claims 1-5, wherein the blade further comprises microtabs.

7. The blade according to any of the claims 1-6, wherein the lift regulating device is biased away from the surface of the blade and activation of the operation device attracts the lift regulating device towards the surface of the blade or deflects the lift regulating device away from the surface of the blade.

8. The blade according to any of the claims 1-7, wherein the operation device comprises a plurality of electromagnets, the plurality of electromagnets being operable individually.

9. The blade according to any of the claims 1-8, wherein the lift regulating device comprises a first permanent magnet positioned so that an electromagnet in the operation device may operate the lift regulating device reversibly from the first state to the second state by repulsing the permanent magnet relative to the electromagnet.

10. The blade according to any of the claims 1-8, wherein the lift regulating device comprises a first permanent magnet positioned so that an electromagnet in the operation device may operate the lift regulating device reversibly from the first state to the second state by attracting the permanent magnet towards the electromagnet.

11. The blade according to any of the claims 1-10, wherein the lift regulating device comprises a plurality of permanent magnets arranged at discrete sites of the lift regulating device.

12. A wind turbine configured to convert wind energy to electrical energy, the wind turbine comprising:
a tower having a first and an opposite second end,
a nacelle positioned at the first end of the tower, a substantially horizontal rotor shaft rotatably mounted in the nacelle, a hub mounted at the rotor shaft,
a blade for a rotor of a wind turbine having a substantially horizontal rotor shaft, the blade extending in a substantially radial direction from the hub when mounted to the hub, the blade comprises:
a profiled contour comprising a pressure side and a suction side and a leading edge and a trailing edge connecting the pressure side and the suction side, and
a lift regulating device comprising a magnetisable material and an operation device comprising an electromagnet configured to operate the lift regulating device between a first state and a second state.

13. The wind turbine according to claim 12, wherein the wind turbine comprises three blades.

14. The wind turbine according to claim 12 or 13, wherein the wind turbine comprises a sensor for sensing wind conditions, the sensor transmitting signals representing the state of wind conditions to the operation device so as to operate the lift regulating device in response to changes in wind conditions.

15. The wind turbine according to claim 14, wherein a sensor is positioned in a blade.

16. A method of operating a wind turbine configured to convert wind energy to electrical energy, the wind turbine comprising:
a tower having a first and an opposite second end,
a nacelle positioned at the first end of the tower, a substantially horizontal rotor shaft rotatably mounted in the nacelle, a hub mounted at the rotor shaft,
a blade for a rotor of a wind turbine having a substantially horizontal rotor shaft, the blade extending in a substantially radial direction from the hub when mounted to the hub, the blade comprises:
a profiled contour comprising a pressure side and a suction side and a leading edge and a trailing edge connecting the pressure side and the suction side,
a lift regulating device comprising a magnetisable material and an operation device comprising an electromagnet configured to operate the lift regulating device between a first state and a second state,
the method comprising the steps of:
obtaining information regarding current wind conditions at the wind turbine,
determining lift regulating device settings based on the current wind conditions,
adjusting the lift regulating device based on the lift regulating device settings using the electromagnet.

17. The method according to claim 16, wherein the wind turbine comprises a wind sensor and the method comprises obtaining wind condition information from the wind sensor.
